# EUROPEAN PATENT SPECIFICATION

(11) **EP 3 534 140 B1**
(45) Date of publication and mention of the grant of the patent: **18.05.2022**
(21) Application number: 16919890.0
(22) Date of filing: 28.10.2016
(51) Int. Cl.: G01N 1/38, B01F 29/00

(54) **DEVICE FOR MIXING SAMPLE BY USING CAPLESS TUBE**
VORRICHTUNG ZUM MISCHEN VON PROBEN UNTER VERWENDUNG EINES KAPPENLOSEN RÖHRCHEN
DISPOSITIF DE MÉLANGE D'ÉCHANTILLON À L'AIDE D'UN TUBE SANS BOUCHON

(43) Date of publication of application: 04.09.2019
(73) Proprietor: Boditech Med Inc., Chuncheon-si, Gangwon-do 24398 (KR)
(72) Inventor: KIM, Byeong Chul, Chuncheon-si Gangwon-do 24300 (KR); LEE, Young Haeng, Seoul 01813 (KR); CHONG, Kyong Hwa, Goyang-si Gyeonggi-do 10371 (KR); LEE, Min Hwan, Seoul 04804 (KR); PARK, Yu Jin, Chuncheon-si Gangwon-do 24393 (KR)
(74) Representative: De Vries & Metman
(86) International application number: PCT/KR2016/012258
(87) International publication number: WO 2018/079885

(56) References cited:
- DE-A1- 19 819 447
- JP-A- 2012 139 608
- JP-B2- H06 103 299
- KR-B1- 101 403 869
- US-A1- 2004 095 845
- US-A1- 2004 095 845
- US-A1- 2014 251 887
- US-A1- 2016 209 329
- US-B1- 6 235 537

## Description

### Technical Field

The present invention relates to a device for mixing a sample by using a capless tube.

### Background Art

Of clinical immunoassay instruments, many use blood collection tubes that preserve blood taken from hospital patients. Of these, instruments for separating blood plasma and blood cells of a blood sample preserved in a blood collection tube through centrifugation and collecting and testing only blood plasma have been mainly used.

However, such instruments have a drawback in that it takes long time to test and it is inconvenient to separate the sample. To overcome such a drawback, clinical immunoassay instruments using whole blood are haven been introduced. The whole blood collected in a collection tube is separated after a certain period of time (about several minutes), with dense blood cells sinking to the bottom of the tube and blood plasma floating on the top. Therefore, depending on the collection time and section of a sample contained in the collection tube, an error in collection of target protein to be used may occur. In an effort to solve such a problem, a method of artificially mixing blood is used when blood in a blood collection tube is to be used for diagnosis.

The blood collection tube normally stores blood with a rubber cap closed. When blood collection is required, a needle of a syringe is pierced through the cap to collect the blood. Before collecting the blood in the blood collection tube, the blood is mixed in the tube by using a blood mixing device as described above.

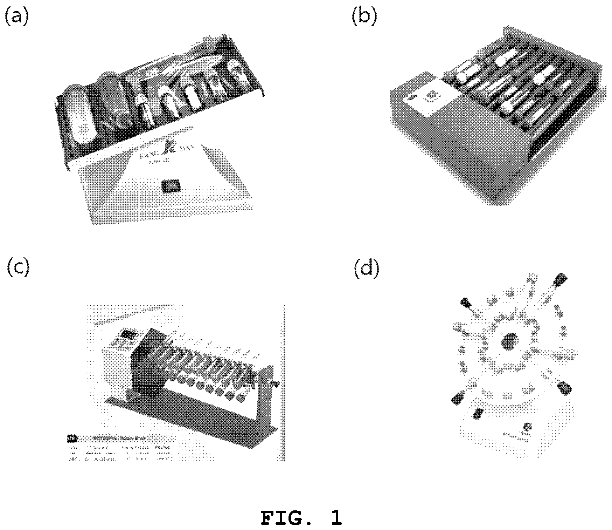

FIGS. 1a, 1b, 1c, and 1d show general blood mixing devices. FIGS. 1a and 1b show blood mixing devices in which blood collection tubes are rotated or vibrated within a predetermined angle range in a state of being placed on their side on top of a tray, thus mixing blood therein. Alternatively, FIG. 1c shows a blood mixing device in which blood collection tubes are rotated vertically, thus mixing blood therein, and FIG. 1d shows a blood mixing device in which blood collection tubes secured on a rotatable tray in a radial arrangement are rotated, thus mixing blood therein.

However, such a series of processes in which blood is mixed in a blood collection tube with a cap closed and the blood is collected through a sample collection needle is very disadvantageous in application to automated analysis equipment.

In detail, in order to collect a sample in an automated sample analyzer, a long needle has to be pierced through cap of the blood collection tube to collect the sample. In this case, the needle has to be cleaned after each use because of the possibility of contamination. Therefore, there is a problem in that a separate device for cleaning the used needle may be required in addition to a device for piercing the needle through the cap and withdrawing the needle, resulting in the analyzer being complicated in configuration and being larger in size.

Accordingly, the present inventor has developed a sample mixing device which is advantageous for automation of sample collection and analysis by using a capless tube in order to exclude provision of a separate needle and accompanying peripheral devices thereof in automating a process of collecting a sample.

The invention provides a device in accordance with the claim.

A state of the art device according to the preamble of the claim is known from document US 6 235 537 B1, which device provides a spindle which during use of the device is completely inserted into the inner side of the tube.

### Disclosure

### Technical Problem

Accordingly, the present invention has been made keeping in mind the above problems occurring in the related art, and an objective of the present invention is to provide a device for mixing a sample, which is advantageous for an automated sample analyzer.

### Technical Solution

In order to accomplish the above objective, the present invention provides a device for mixing a sample, the device including: a jig supporting a capless tube such that the capless tube stands upright so as to enable rotation; and a driving unit generating a driving power for the rotation of the capless tube.

The driving unit is provided at an upper end of the capless tube so as to be movable up and down.

The driving unit includes:
a lifting frame configured to be movable up and down; a first driving source moving the lifting frame up and down; a gripping head provided at the lifting frame so as to be rotatable and gripping the upper end of the capless tube in close contact therewith;
and a second driving source rotating the gripping head.

The jig is configured such that the capless tube is seated on an upper surface of the jig so as to be freely rotatable.

In an embodiment that is not covered by the claims, the driving unit may generate a rotational driving power in contact with a side surface of the capless tube.

In an embodiment that is not covered by the claims, the jig may include: multiple driven rollers configured to be freely rotatable in contact with the side surface of the capless tube. Furthermore, the jig may include at least one driven roller configured to be elastically supported to be movable back and forth.

In an embodiment that is not covered by the claims, the driving unit may generate a rotational driving power in contact with a lower end of the capless tube. Furthermore, the jig may elastically support an upper end of the capless tube.

Also herein there is provided a method for mixing a sample by using a capless tube, the method including: rotating the capless tube that is in an upright standing state, thus mixing the sample.

A rotational driving power for the capless tube may be generated by a driving source that is moved up and down relative to an upper end of the capless tube and comes into close contact with the upper end of the capless tube. Furthermore, the driving source may rotate while in contact with the capless tube.

### Advantageous Effects

The device for mixing the sample according to the present invention is configured such that mixing of the sample is performed by rotation of the capless tube that is rotated in the upright standing state. Therefore, it is possible to use a disposable sampling tool instead of a needle during collection of the sample after mixing of the sample in the automated sample analyzer. In particular, it is not necessary to use the needle for sample collection, and thus it is possible to simplify configuration of the automated sample analyzer by excluding configuration for operating the needle and a cleaning device accompanying the same.

### Description of Drawings

FIGS. 1a, 1b, 1c, and 1d are photographs showing a general blood mixing devices.
FIG. 2 is a view showing a configuration of a device for mixing a sample according to the present invention.
FIGS. 3a, 3b, 3c, and 3d are views showing an operation example of the device for mixing the sample according to the present invention.
FIGS. 4a and 4b are photographs showing before and after mixing of the sample by the device for mixing the sample according to the present invention.
FIG. 5 is a view showing a configuration of a device for mixing a sample according to an exemplary embodiment of the present invention.
FIGS. 6a and 6b are views showing a configuration of a device for mixing a sample according to another embodiment that is not covered by the claims.
FIG. 7 is a view showing a configuration of a device for mixing a sample according to a further embodiment that is not covered by the claims.

### Best Mode

In the following description, the structural or functional description specified to exemplary embodiments according to the concept of the present invention is intended to describe the exemplary embodiments, so it should be understood that the present invention may be variously embodied, without being limited to the exemplary embodiments. It should be understood that the exemplary embodiments according to the concept of the present invention are not limited to the embodiments which will be described hereinbelow with reference to the accompanying drawings, but various modifications, equivalents, additions and substitutions are possible, without departing from the scope of the invention, the matter for which protection is sought being defined by the claims.

It will be understood that, although the terms first, second, etc. may be used herein to describe various elements, these elements should not be limited by these terms. These terms are only used to distinguish one element, from another element. For instance, a first element discussed below could be termed a second element without departing from the teachings of the present invention. Similarly, the second element could also be termed the first element.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Further, the terms used herein to describe a relationship between elements, for example, "between", "directly between", "adjacent", or "directly adjacent" should be interpreted in the same manner as those described above.

The terminology used herein is for the purpose of describing particular embodiments only and is not intended to be limiting. As used herein, the singular forms "a", "an", and "the" are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Hereinafter, the present invention will be described in detail with reference to the accompanying drawings.

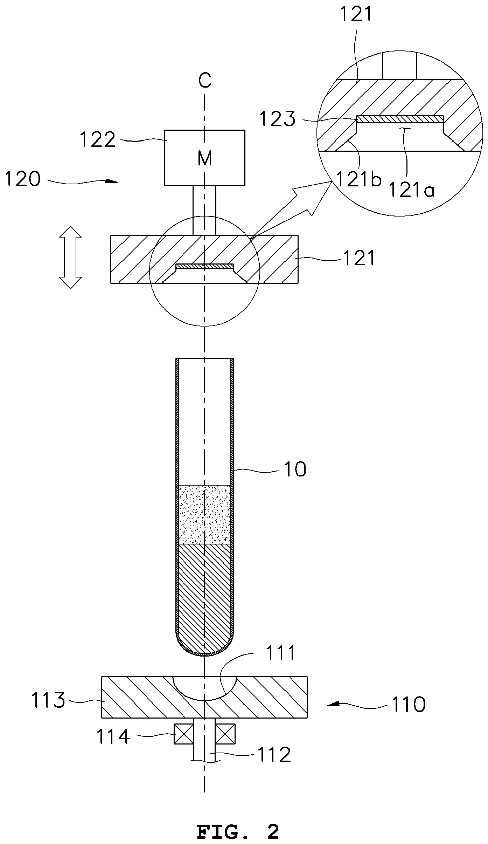

Referring to FIG. 2, a device for mixing a sample according to the present invention includes: a jig 110 for supporting a capless tube 10 such that the capless tube 10 stands upright so as to enable rotation; and a driving unit 120 for generating a driving power for the rotation of the capless tube 10.

A tube used in the present invention is the capless tube 10 in which an upper opening thereof is not covered with a cap. Herein, the sample may be a liquid sample such as a whole blood sample or may be a mixture of liquid and solid.

The jig 110 includes a rotary tray 113 having a seat recess 111 formed in an upper surface thereof and a rotary shaft 112 shafted to lower end thereof, and a bearing 114 for supporting the rotary shaft 112 such that the rotary shaft is freely rotatable.

The seat recess 111 may be a curved recess that is the same as or slightly larger in curvature radius than a lower curved surface of the tube 10 such that a portion of a lower end of the tube 10 is inserted into the seat recess. Herein, a guide member may be provided to support a side portion of the capless tube 10 such that the capless tube 10 is maintained in an upright standing state.

On the other hand, the seat recess may be provided to have a depth sufficient that the tube is located in the seat recess by self-standing without the aid of the separate guide member.

The driving unit 120 is provided at an upper end of the capless tube 10 so as to be movable up and down and includes a gripping head 121 for gripping and supporting the upper end of the capless tube 10, and a driving source 122 for rotating the gripping head 121.

In FIG. 2, a separate driving source for moving the driving unit 120 up and down and a guide means for guiding a moving direction of the driving unit 120 are provided, and a description thereof will be given later with reference to the related drawings.

The drive source 122 may be provided by using a variety of well-known electric motors. A driving power transmitting means for transmit a driving power such as a gear or a belt may be further provided between the gripping head 121 and the driving source 122.

The gripping head 121 has a gripping recess 121a in which the upper end of the capless tube 10 is received. It is preferable that a guide surface 121b extended with an inclination from the gripping recess 121a be configured such that the upper end of the capless tube 10 is guided along the guide surface 121b of the gripping head 121 so as to be seated in the gripping recess 121a at a correct position.

It is preferable that a friction pad 123 be provided on a bottom surface of the gripping recess 121a. The friction pad 123 is configured to be brought into contact with the capless tube 10 with a large frictional force. This ensures that slip of the capless tube 10 that may occur during rotation of the gripping head 121 can be prevented, and the rotation of the gripping head 121 can be correctly transmitted to the capless tube 10.

The jig 110 and the driving unit 120 are coaxially provided on an axis C. The capless tube 10 is rotated about the axis C, causing the sample to be mixed.

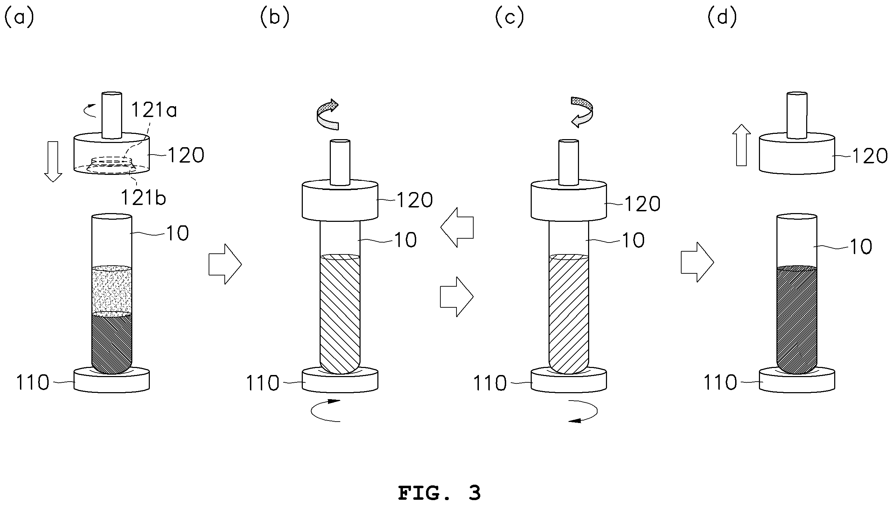

FIGS. 3a, 3b, 3c, and 3d are views showing an operation example of the device for mixing the sample according to the present invention.

Referring to FIG. 3a, the capless tube 10 containing the sample is placed on an upper surface of the jig 110, and then the driving unit 120 is moved downward to come into close contact with the capless tube 10, thus gripping the upper end of the capless tube.

It is preferable that the driving unit 120 be moved downward while rotating at a low speed, thus gripping the capless tube 10.

The capless tube 10 may not be exactly seated on the upper surface of the jig 110 along a direction of the rotation axis of the jig. However, in the present invention, due to the fact that the driving unit 120 is moved downward while rotating at a low speed, the upper end of the capless tube 10 is caused to be brought into contact with the guide surface 121b having an inclination, such that the capless tube to be gripped is guided to be naturally located along the rotation axis of the driving unit 120 and seated in the gripping recess 122 at a correct position.

Meanwhile, a rotational speed of the driving unit 120 when the driving unit 120 is moved downward is appropriately determined within a range lower than a rotational speed at which the driving unit is rotated when the sample of the capless tube 10 is mixed.

Next, as shown in FIGS. 3b and 3c, the capless tube 10 is rotated in cooperation with rotation of the driving unit 120 in the same direction, thus mixing the sample. At this time, the capless tube 10 may be rotated in either direction, or may be repeatedly rotated in a clockwise or counterclockwise direction for a predetermined period of time.

As shown in FIG. 3d, after the sample is mixed, the driving unit 120 is moved upward to return to an original position thereof, and then collection of the sample in the capless tube 10 and analysis are performed.

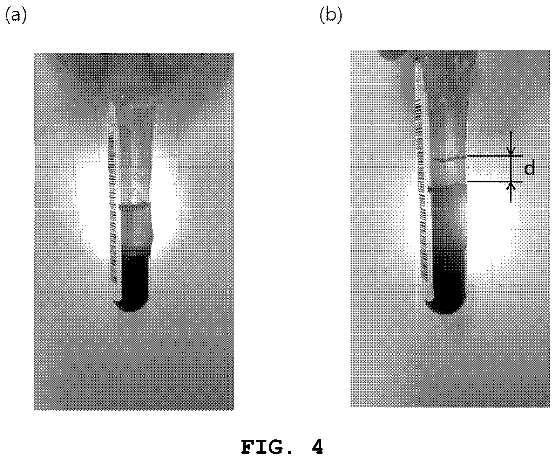

FIGS. 4a and 4b are photographs showing a state before and after mixing blood in a tube by rotating the tube under predetermined conditions. FIG. 4a is a photograph of the tube taken before mixing the blood, and FIG. 4b is a photograph of the tube after rotating the tube for 35 seconds at a speed of 6000 RPM.

In FIG. 4b, "d" denotes a difference in maximum liquid level height of blood, which is caused by a centrifugal force when the tube is rotated. It can be seen that the difference in the liquid level height occurs within about 1 cm in the range of the rotational speed at which sufficient mixing of blood is achieved in a typical tube diameter range (several centimeters), and this difference is not a high value. Therefore, the device for mixing the sample according to the present invention ensures that even when the sample is mixed by rotating the capless tube, the sample can be mixed without overflowing.

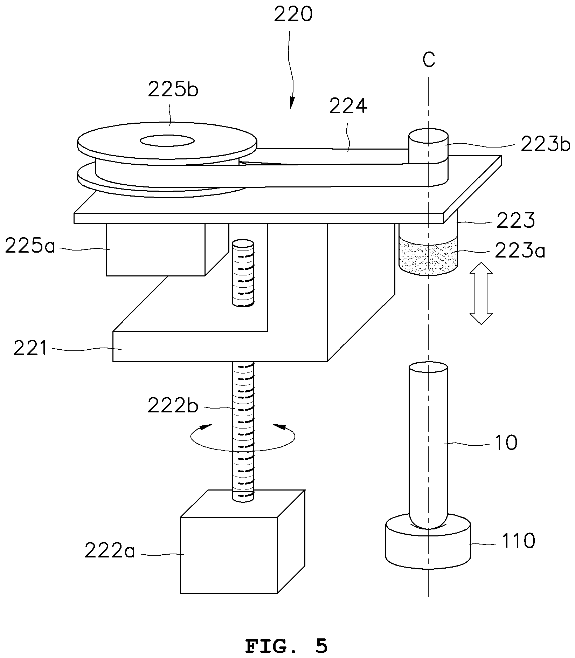

FIG. 5 a view showing a configuration of a device for mixing a sample according to an exemplary embodiment of the present invention. It is to be noted that the same reference numerals are used for the same components as those of the previously described embodiment, and a redundant description is omitted.

Referring to FIG. 5, the device for mixing the sample according to the present embodiment includes a jig 110 on which a capless tube 10 stands upright so as to enable rotation, and a driving unit 220 for generating a driving power for the rotation of the capless tube 10.

The driving unit 220 includes: a lifting frame 221 configured to be movable up and down; first driving sources 222a and 222b for moving the lifting frame 221 up and down; a gripping head 223 provided at the lifting frame 221 as so to be rotatable and gripping an upper end of the capless tube 10 in close contact therewith; and second driving sources 225a and 225b connected to the gripping head 223 by a belt 224 and a second driving source 222b to provide a rotational driving power to the gripping head.

The lifting frame 221 is movable up and down and an up and down movement of the lifting frame may be guided, for example, by a guide means secured to a housing (not shown) defining the outer appearance of the device. The lifting frame 221 is provided with the gripping head 223 and the second driving sources 225a and 225b.

The first driving sources 222a and 222b operate the lifting frame 221 up and down. In the present embodiment, the first driving sources are respectively provided as a first driving motor 222a and a ball screw 222b rotated in a normal or reverse direction by the first driving motor 222a to adjust the height of the lifting frame 221.

The gripping head 223 is provided at the lifting frame 221 so as to be rotatable. The gripping head 223 configured to be moved up and down in cooperation with the up and down movement of the lifting frame 221 is moved up and down along the direction of the rotation axis C of the capless tube 10.

Meanwhile, the gripping head 223 is provided at a lower end thereof a contact pad 223a coming into close contact with the upper end of the capless tube 10.

The second driving sources 225a and 225b provide the rotational driving power to the gripping head 223. The second driving sources include a second driving motor 225a provided at the lifting frame 221, and a belt 224 for transmitting the rotational driving power to the gripping head 223.

In the present embodiment, the second driving motor 225a is provided with a driving wheel 225b. The driving wheel 225b is connected to a driven shaft 223b extended from an upper end of the gripping head 223 by a belt 224. Herein, the driving wheel 225b is larger in diameter than the driven shaft 223b, such that a high speed up ratio can be obtained.

The device for mixing the sample of the present embodiment configured as described above is characterized in that controlling upper and lower positions of the gripping head 223 is performed by the first driving motor 222a, while controlling of a rotational speed of the gripping head 223 is performed by the second driving motor 225a, whereby the sample in the capless tube 10 is mixed.

Meanwhile, operations of the first driving motor 222a and the second driving motor 225a are controlled by a controller (not shown). Such operations thereof may be directly performed by a user in a manual manner. Alternatively, the first and second driving motors may function as a unit module for sample mixing in an automated sample analysis facility such that operations thereof are automatically performed by a series of control commands that are programmed.

In the above-described embodiments, although the driving source for rotating the capless tube is disposed at the upper end of the capless tube, in embodiments that are not covered by the claims, the driving source may be disposed on a side surface or a lower end of the capless tube, and specific embodiments thereof will be described in below.

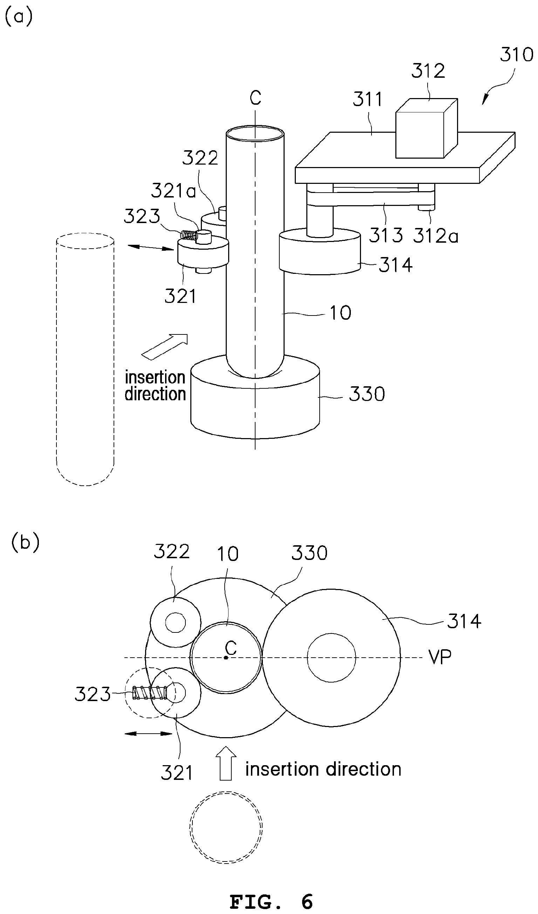

FIGS. 6a and 6b are views showing a configuration of a device for mixing a sample according to another embodiment that is not covered by the claims.

Referring to FIGS. 6a and 6b, a device for mixing a sample according to another embodiment that is not covered by the claims includes a driving unit 310 configured to be rotated in contact with a side surface of a capless tube 10, and a jig configured to be freely rotatable in contact with the side surface of the capless tube 10.

The driving unit 310 includes a driving motor 312 secured to a gripping frame 311, and a driving roller 314 connected to a driving shaft 312a of the driving motor 312 by a belt 313 and configured to be rotated in contact with the capless tube 10.

The jig is provided as multiple driven rollers 321 and 322 that are located at positions opposite to the driving roller 314 and are freely rotatable in contact with the side surface of the capless tube 10.

In the preset embodiment, the driven rollers 321 and 322 are constituted by a first driven roller 321 and a second driven roller 322. It is preferable that the first driven roller 321 and the second driven roller 322 be disposed symmetrically with respect to a vertical plane VP. Herein, the vertical plane VP means a plane that includes a rotary shaft and a rotation axis C of the driving roller 314.

It is preferable that the rotary shaft of at least one of the two driven rollers 321 and 322 be configured to be movable, and this movable rotary shaft be elastically supported by an elastic body 323.

In the embodiment, the first driven roller 321 is movable back and forth in parallel with the vertical plane VP. At this time, a rotation axis 321a of the first driven roller 321 is elastically supported by the elastic body 323.

Therefore, when the capless tube 10 is inserted horizontally at a position facing the first driven roller 321, the elastic body 323 is compressed, causing the first driven roller 321 to be moved forth, whereby the capless tube 10 is inserted. Thereafter, when the capless tube 10 is located on the rotation axis C, the first driven roller 321 is moved back by a restoring force of the elastic body 323, thus being brought into close contact with the side surface of the capless tube 10.

The device for mixing the sample configured as described above is characterized in that the capless tube 10 is rotated in cooperation with rotation of the driving roller 314 and a back and forth movement of the multiple driven rollers 321 and 322, whereby the sample in the capless tube is mixed.

Meanwhile, in the present embodiment, the capless tube 10 can mix the sample by being located on the rotation axis C by the multiple driven rollers 321 and 322 together with the driving roller 314. Herein, it is preferable that a jig plate 330 on which a lower end of the capless tube 10 is seated and configured to be freely rotatable be additionally provided. The jig plate 330 may be provided in the same manner as the jig 110 of the above-described embodiment (see FIG. 2).

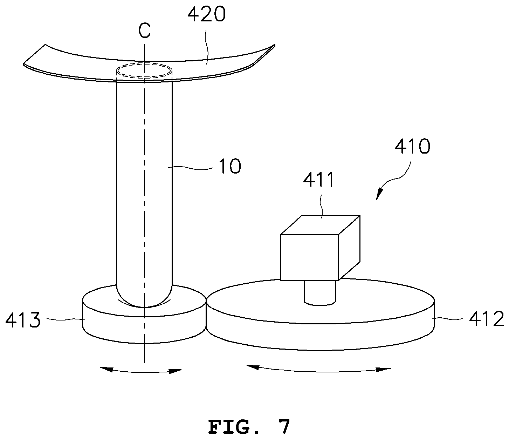

FIG. 7 is a view showing a configuration of a device for mixing a sample according to a further embodiment that is not covered by the claims.

Referring to FIG. 7, a device for mixing a sample according to a further embodiment that is not covered by the claims includes a driving unit 410 on which a capless tube 10 is vertically disposed so as to be rotatable, and an elastic support part 420 elastically supporting an upper end of the capless tube 10.

The driving unit 410 includes a driving motor 411, a first rotary body 412 rotated by the driving motor 411, a second rotary body 413 rotated in a state of being in outer contact with the first rotary body 412.

The first rotary body 412 is larger in diameter than the second rotary body 413 such that a high speed up ratio is obtained. The first and second rotary bodies are provided as gears that are tooth-engaged with each other, but are not limited thereto. The first and second rotary bodies may be connected to each other by a belt to transmit a rotational driving power therethrough.

The second rotary body 413 is configured such that the capless tube 10 is vertically located on an upper surface thereof. Herein, the upper end of the capless tube 10 is supported by the elastic support part 420.

The elastic support part 420 supports the upper end of the capless tube 10 and may be provided as, for example, a plate spring.

Although the exemplary embodiments of the present invention have been disclosed for illustrative purposes, those skilled in the art will appreciate that various modifications, additions and substitutions are possible, without departing from the scope of the invention as disclosed in the accompanying claims.

### Description of the Reference Numerals in the Drawings

10: capless tube 110: jig
120, 220, 310, 410: driving unit 330: jig plate

## Claims

1. A device for mixing a sample, the device comprising:
a jig (110) supporting a capless tube (10) such that the capless tube (10) stands upright so as to enable rotation; and
a driving unit (120, 220) generating a driving power for the rotation of the capless tube (10), wherein the jig (110) is configured such that the capless tube (10) is seated on an upper surface of the jig (110) so as to be freely rotatable, and wherein the driving unit (120, 220) is provided at an upper end of the capless tube (10) and includes:
a lifting frame (221) configured to be movable up and down; and
a first driving source (222a, 222b) moving the lifting frame (221) up and down;
**characterised in that** the driving unit (120, 220) further comprises
a gripping head (121, 223) provided at the lifting frame (221) so as to be rotatable and gripping the upper end of the capless tube (10) in close contact therewith; and
a second driving source (122, 225a, 225b) rotating the gripping head (121, 223).

## Patentansprüche

1. Vorrichtung zum Mischen einer Probe, wobei die Vorrichtung aufweist:
eine Einspannvorrichtung (110), die ein deckelloses Rohr (10) derart hält, dass das deckellose Rohr (10) aufrecht steht, um eine Drehung zu ermöglichen; und
eine Antriebseinheit (120, 220), die eine Antriebsleistung für die Drehung des deckellosen Rohrs (10) erzeugt, wobei die Einspannvorrichtung (110) derart konfiguriert ist, dass das deckellose Rohr (10) auf einer oberen Oberfläche der Einspannvorrichtung (110) sitzt, so dass es frei drehbar ist, und wobei die Antriebseinheit (120, 220) an einem oberen Ende des deckellosen Rohrs (10) bereitgestellt ist und umfasst:
einen Hubrahmen (221), der derart konfiguriert ist, dass er nach oben und unten beweglich ist; und
eine erste Antriebsquelle (222a, 222b), die den Hubrahmen (221) nach oben und unten bewegt;
**dadurch gekennzeichnet, dass** die Antriebseinheit (120, 220) ferner aufweist:
einen Greifkopf (121, 223), der an dem Hubrahmen (221) derart bereitgestellt ist, dass er drehbar ist und das obere Ende des deckellosen Rohrs (10) in engem Kontakt damit greift; und
eine zweite Antriebsquelle (122, 225a, 225b), die den Greifkopf (121, 223) dreht.

## Revendications

1. Dispositif de mélange d'un échantillon, le dispositif comprenant :
un gabarit (110) supportant un tube sans bouchon (10) de telle sorte que le tube sans bouchon (10) se tient debout de manière à permettre une rotation ; et
une unité d'entraînement (120, 220) générant une énergie d'entraînement pour la rotation du tube sans bouchon (10), dans lequel le gabarit (110) est configuré de telle sorte que le tube sans bouchon (10) est assis sur une surface supérieure du gabarit (110) de manière à pouvoir tourner librement, et dans lequel l'unité d'entraînement (120, 220) est ménagée à une extrémité supérieure du tube sans bouchon (10) et inclut :
un cadre de levage (221) configuré pour pouvoir se déplacer vers le haut et vers le bas ; et
une première source d'entraînement (222a, 222b) déplaçant le cadre de levage (221) vers le haut et vers le bas ;
**caractérisé en ce que** l'unité d'entraînement (120, 220) comprend en outre
une tête de préhension (121, 223) ménagée au niveau du cadre de levage (221) de manière à pouvoir tourner et saisissant l'extrémité supérieure du tube sans bouchon (10) en contact étroit avec celui-ci ; et
une seconde source d'entraînement (122, 225a, 225b) faisant tourner la tête de préhension (121, 223).
